# EUROPEAN PATENT APPLICATION

(11) **EP 4 796 400 A1**
(43) Date of publication of application: **26.08.2026**
(21) Application number: 24881363.6
(22) Date of filing: 27.09.2024
(51) Int. Cl.: B60W 30/06

(54) **AUTOMATIC PARKING CONTROL METHOD AND APPARATUS, COMPUTING DEVICE, VEHICLE AND STORAGE MEDIUM**

(30) Priority: 27.10.2023 CN 202311424863
(71) Applicant: BYD Company Limited, Shenzhen, Guangdong 518118 (CN)
(72) Inventor: YANG, Dongsheng, Shenzhen, Guangdong 518118 (CN); TANG, Minxin, Shenzhen, Guangdong 518118 (CN); XIE, Shaocong, Shenzhen, Guangdong 518118 (CN); GAO, Yuanyuan, Shenzhen, Guangdong 518118 (CN)
(74) Representative: Taor, Simon Edward William
(86) International application number: PCT/CN2024/121710
(87) International publication number: WO 2025/086997

(57) **Abstract**

Disclosed are an automatic parking control method and apparatus, a computing device, a vehicle, and a storage medium. The method includes: obtaining first position information of a position of a vehicle, a tilt angle of the vehicle, and second position information and direction information of a target empty parking space; judging, based on the tilt angle of the vehicle and the direction information of the target empty parking space, whether the vehicle is tilted relative to the target empty parking space; determining a lateral movement distance and a lateral movement direction of the vehicle based on the first position information and the second position information if the vehicle is not tilted relative to the target empty parking space; and controlling, based on the lateral movement distance and the lateral movement direction, the vehicle to move laterally into the target empty parking space.

## Description

This application claims priority to Chinese Patent Application No. 202311424863.7, filed with the China National Intellectual Property Administration on October 27, 2023 and entitled "AUTOMATIC PARKING CONTROL METHOD AND APPARATUS, AND COMPUTING DEVICE", which is incorporated herein by reference in its entirety.

### TECHNICAL FIELD

This application relates to the field of automatic parking control technologies, and in particular, to an automatic parking control method and apparatus, a computing device, a vehicle, and a storage medium.

### BACKGROUND

With the development of society and the progress of modern technology, vehicles have become an essential tool for people's daily travel. Intelligent parking assistance systems of the vehicles are becoming increasingly mature. However, most vehicles equipped with parking assistance systems currently on a market primarily use geometric methods for path planning due to limitations imposed by drive configuration of the vehicles. For example, a vehicle may move forward for a long distance from an initial position, then reverse and apply steering, and finally back into a final position. However, such a parking manner is time-consuming and results in a poor user experience. Therefore, how to better control automatic parking is very important.

### SUMMARY

Embodiments of this application provide an automatic parking control method and apparatus, a computing device, a vehicle, and a storage medium, to improve efficiency of automatic parking.

According to a first aspect, an embodiment of this application provides an automatic parking control method. The method includes:
obtaining first position information of a position of a vehicle, a tilt angle of the vehicle, and second position information and direction information of a target empty parking space;
judging, based on the tilt angle of the vehicle and the direction information of the target empty parking space, whether the vehicle is tilted relative to the target empty parking space;
determining a lateral movement distance and a lateral movement direction of the vehicle based on the first position information and the second position information if the vehicle is not tilted relative to the target empty parking space; and
controlling, based on the lateral movement distance and the lateral movement direction, the vehicle to move laterally into the target empty parking space.

In some embodiments, the determining a lateral movement distance and a lateral movement direction of the vehicle based on the first position information and the second position information if the vehicle is not tilted relative to the target empty parking space includes: if the vehicle is not tilted relative to the target empty parking space, a front end of the vehicle does not cross a first parking space boundary line of the target empty parking space, and a rear end of the vehicle does not cross a second parking space boundary line of the target empty parking space, determining the lateral movement distance and the lateral movement direction of the vehicle based on the first position information and the second position information.

In some embodiments, the determining a lateral movement distance and a lateral movement direction of the vehicle based on the first position information and the second position information if the vehicle is not tilted relative to the target empty parking space includes: if the vehicle is not tilted relative to the target empty parking space, and any side of the vehicle crosses a corresponding parking space boundary line of the target empty parking space, determining the lateral movement distance, the lateral movement direction, the longitudinal movement distance, and the longitudinal movement direction of the vehicle based on the first position information and the second position information, where the any side means a vehicle body, a front end, or a rear end of any side of the vehicle; and the controlling, based on the lateral movement distance and the lateral movement direction, the vehicle to move laterally into the target empty parking space includes: controlling, based on the lateral movement distance and the lateral movement direction, the vehicle to move laterally, and controlling, based on the longitudinal movement distance and the longitudinal movement direction, the vehicle to move longitudinally, until the vehicle moves into the target empty parking space.

In some embodiments, the method further includes: if the vehicle is tilted relative to the target empty parking space, and a distance between a center of mass of the vehicle and a center point of the target empty parking space is less than a preset distance threshold, determining a rotation angle and rotation direction of the vehicle based on the tilt angle of the vehicle and the direction information of the target empty parking space; and controlling, based on the rotation angle and the rotation direction, the vehicle to rotate into the target empty parking space.

In some embodiments, the method further includes: if the vehicle is tilted relative to the target empty parking space, and a distance between a center of mass of the vehicle and a center point of the target empty parking space is greater than or equal to a preset distance threshold, determining a rotation angle and a rotation direction of the vehicle based on the tilt angle of the vehicle and the direction information of the target empty parking space; and determining the lateral movement distance and the lateral movement direction of the vehicle based on the first position information and the second position information; and controlling, based on the rotation angle and the rotation direction, the vehicle to rotate, and controlling, based on the lateral movement distance and the lateral movement direction, the vehicle to move laterally, until the vehicle moves into the target empty parking space.

In some embodiments, the controlling the vehicle to move laterally includes: controlling a left front wheel and a right rear wheel of the vehicle to rotate forward, and controlling a left rear wheel and a right front wheel of the vehicle to rotate backward, to control the vehicle to move parallel to the left; or controlling the left front wheel and the right rear wheel of the vehicle to rotate backward, and controlling the left rear wheel and the right front wheel of the vehicle to rotate forward, to control the vehicle to move parallel to the right.

In some embodiments, the controlling the vehicle to rotate includes: controlling, by using the center of mass of the vehicle as an origin, a left wheel and a right wheel of the vehicle to rotate in different directions, to control the vehicle to rotate.

In some embodiments, the obtaining a tilt angle of the vehicle includes: determining coordinates of four corner points of the vehicle in a preset coordinate system, where the coordinate system is established by using a lateral centerline and a longitudinal centerline of the vehicle as coordinate axes; and calculating the tilt angle of the vehicle relative to a horizontal plane based on the coordinates of the four corner points of the vehicle in the preset coordinate system.

In some embodiments, the obtaining direction information of a target empty parking space includes: determining coordinates of four corner points of the target empty parking space in the preset coordinate system, where the coordinate system is established by using the lateral centerline and the longitudinal centerline of the vehicle as the coordinate axes; calculating a length direction of the target empty parking space based on the coordinates of the four corner points of the target empty parking space in the preset coordinate system; and determining the length direction of the target empty parking space as the direction information of the target empty parking space.

In some embodiments, the judging, based on the tilt angle of the vehicle and the direction information of the target empty parking space, whether the vehicle is tilted relative to the target empty parking space includes: determining a tilt angle of the vehicle relative to the target empty parking space based on the tilt angle of the vehicle and the direction information of the target empty parking space; and if the tilt angle of the vehicle relative to the target empty parking space is not equal to 0, determining that the vehicle is tilted relative to the target empty parking space; or if the tilt angle of the vehicle relative to the target empty parking space is equal to 0, determining that the vehicle is not tilted relative to the target empty parking space.

In some embodiments, the determining a tilt angle of the vehicle relative to the target empty parking space based on the tilt angle of the vehicle and the direction information of the target empty parking space includes: determining the tilt angle of the vehicle relative to the target empty parking space based on the tilt angle of the vehicle, the direction information of the target empty parking space, and an angle calculation formula.

According to a second aspect, an embodiment of this application provides an automatic parking control apparatus. The apparatus includes:
an obtaining unit, configured to obtain first position information of a position of a vehicle, a tilt angle of the vehicle, and second position information and direction information of a target empty parking space;
a judging unit, configured to judge, based on the tilt angle of the vehicle and the direction information of the target empty parking space, whether the vehicle is tilted relative to the target empty parking space;
a determining unit, configured to determine a lateral movement distance and a lateral movement direction of the vehicle based on the first position information and the second position information if the vehicle is not tilted relative to the target empty parking space; and
a control unit, configured to control, based on the lateral movement distance and the lateral movement direction, the vehicle to move laterally into the target empty parking space.

According to a third aspect, an embodiment of this application provides a computing device. The computing device includes a processor and a memory. The processor is configured to perform the method according to the first aspect.

According to a fourth aspect, an embodiment of this application provides a vehicle. The vehicle includes a vehicle main body and an automatic parking control apparatus. The automatic parking control apparatus is configured to perform the method in the first aspect to control automatic parking of the vehicle.

According to a fifth aspect, an embodiment of this application provides a computer-readable storage medium. The computer-readable storage medium stores program instructions, and when the program instructions are executed, the method in the first aspect is implemented.

According to embodiments of this application, the first position information of the position of the vehicle, the tilt angle of the vehicle, and the second position information and the direction information of the target empty parking space may be obtained; whether the vehicle is tilted relative to the target empty parking space may be judged based on the tilt angle of the vehicle and the direction information of the target empty parking space; the lateral movement distance and the lateral movement direction of the vehicle may be determined based on the first position information and the second position information if the vehicle is not tilted relative to the target empty parking space; and the vehicle may be controlled, based on the lateral movement distance and the lateral movement direction, to move laterally into the target empty parking space. This manner helps improve efficiency of automatic parking.

### BRIEF DESCRIPTION OF DRAWINGS

To describe the technical solutions in embodiments of this application or the conventional technology more clearly, the following briefly describes the accompanying drawings used for describing embodiments or the conventional technology. It is clear that the accompanying drawings in the following descriptions are merely some embodiments of this application, and a person of ordinary skill in the art may still derive other drawings from these accompanying drawings without creative efforts.
FIG. 1 is a diagram of a structure of an automatic parking control system according to an embodiment of this application;
FIG. 2 is a schematic flowchart of an automatic parking control method according to an embodiment of this application;
FIG. 3 is a diagram of an orientation between a vehicle and a target empty parking space according to an embodiment of this application;
FIG. 4 is a diagram of an orientation between a vehicle and a target empty parking space according to another embodiment of this application;
FIG. 5 is a diagram of an orientation between a vehicle and a target empty parking space according to another embodiment of this application;
FIG. 6 is a diagram of automatic parking based on lateral movement according to an embodiment of this application;
FIG. 7 is a schematic flowchart of an automatic parking control method according to another embodiment of this application;
FIG. 8 is a diagram of an orientation between a vehicle and a target empty parking space according to another embodiment of this application;
FIG. 9 is a diagram of an orientation between a vehicle and a target empty parking space according to another embodiment of this application;
FIG. 10 is a schematic flowchart of an automatic parking control method according to another embodiment of this application;
FIG. 11 is a diagram of an orientation between a vehicle and a target empty parking space according to another embodiment of this application;
FIG. 12 is a schematic flowchart of an automatic parking control method according to another embodiment of this application;
FIG. 13 is a diagram of an orientation between a vehicle and a target empty parking space according to another embodiment of this application;
FIG. 14 is a diagram of a structure of an automatic parking control apparatus according to an embodiment of this application;
FIG. 15 is a diagram of a structure of a computing device according to an embodiment of this application; and
FIG. 16 is a diagram of a structure of a vehicle according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

It should be understood that the term "include" when used in the specification and the appended claims indicates the presence of the described features, wholes, steps, operations, elements, and/or components, but does not preclude the presence or addition of one or more other features, wholes, steps, operations, elements, components, and/or collections thereof.

It should be further understood that the terms used in the specification of this application are merely for the purpose of illustrating specific embodiments and are not intended to limit this application. The terms "one", "a" and "the" of singular forms used in this specification and the appended claims of this application are intended to include plural forms, unless otherwise specified in the context clearly.

It should also be further understood that the term "and/or" as used in the specification of this application and the appended claims means any combination of one or more of associated items and all possible combinations, and includes such combinations.

During specific implementation, a computing device described in embodiments of this application includes but is not limited to another portable device with a touch surface (for example, a touchscreen display and/or a touchpad), such as a mobile phone, a laptop computer, or a tablet computer. It should be further understood that, in some embodiments, a device is not a portable communication device, but a desktop computer with a touch surface (for example, a touchscreen display and/or a touchpad).

Embodiments of this application provide an automatic parking control method and apparatus, and a computing device. The automatic parking control method may be applied to the automatic parking control apparatus. The automatic parking control apparatus may be disposed in a parking controller, and the parking controller may be disposed in the computing device. In some embodiments, the computing device may include but is not limited to a terminal device, a server, and the like that are communicatively connected to a vehicle. Alternatively, the computing device may be a device disposed on the vehicle. The computing device may be independent of the vehicle, or may be a component of the vehicle. In some embodiments, the vehicle is equipped with mecanum wheels, so that each wheel of the vehicle may rotate, implementing lateral movement and rotation of the vehicle. An automatic parking control method provided in an embodiment of this application may be applied to an automatic parking scenario of a vehicle.

In the automatic parking control method provided in this embodiment of this application, first position information of a position of a vehicle, a tilt angle of the vehicle, and second position information and direction information of a target empty parking space may be obtained; whether the vehicle is tilted relative to the target empty parking space may be judged based on the tilt angle of the vehicle and the direction information of the target empty parking space; a lateral movement distance and a lateral movement direction of the vehicle may be determined based on the first position information and the second position information if the vehicle is not tilted relative to the target empty parking space; and the vehicle may be controlled, based on the lateral movement distance and the lateral movement direction, to move laterally into the target empty parking space.

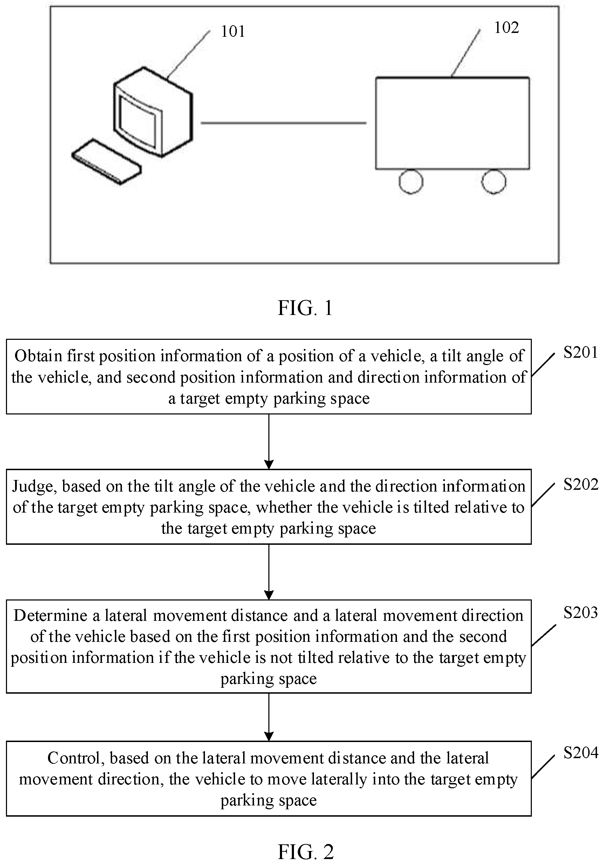

FIG. 1 is a diagram of a structure of an automatic parking control system according to an embodiment of this application. The automatic parking control system includes a computing device 101 and a vehicle 102. The computing device 101 is communicatively connected to the vehicle 102. The vehicle 102 may obtain vehicle data such as first position information of the vehicle and a tilt angle of the vehicle, and send the obtained vehicle data to the computing device 101. The computing device 101 may control automatic parking of the vehicle based on the vehicle data. In some embodiments, the computing device 101 may be a server or a terminal device.

In some embodiments, the computing device 101 may obtain the first position information of a position of the vehicle, the tilt angle of the vehicle, and second position information and direction information of a target empty parking space; judge, based on the tilt angle of the vehicle and the direction information of the target empty parking space, whether the vehicle is tilted relative to the target empty parking space; determine a lateral movement distance and a lateral movement direction of the vehicle based on the first position information and the second position information if the vehicle is not tilted relative to the target empty parking space; and control, based on the lateral movement distance and the lateral movement direction, the vehicle to move laterally into the target empty parking space.

FIG. 2 is a schematic flowchart of an automatic parking control method according to an embodiment of this application. As shown in FIG. 2, the automatic parking control method in this embodiment may be applied to an automatic parking control apparatus, and the automatic parking control apparatus is disposed in a computing device. The method may include the following operations.

S201: Obtain first position information of a position of a vehicle, a tilt angle of the vehicle, and second position information and direction information of a target empty parking space.

In this embodiment of this application, the computing device may obtain the first position information of the position of the vehicle, the tilt angle of the vehicle, and the second position information and the direction information of the target empty parking space. In some embodiments, the first position information of the position of the vehicle and the second position information of the target empty parking space may be obtained by using a positioning apparatus of the vehicle, for example, a global positioning system (Global Positioning System, GPS).

The computing device may establish a coordinate system by using a lateral centerline and a longitudinal centerline of the vehicle as coordinate axes, determine coordinates of four corner points of the vehicle, and determine a length and a width of the vehicle based on the coordinates of the four corner points of the vehicle. In some embodiments, the computing device may obtain the tilt angle of the vehicle through calculation based on the coordinates of the four corner points of the vehicle, where the tilt angle of the vehicle is a tilt angle of the vehicle relative to a horizontal plane.

The computing device may obtain at least one empty parking space found by the vehicle by using an ultrasonic radar, a visual sensor, and the like, select one target empty parking space from the at least one empty parking space, obtain coordinates of four corner points of the target empty parking space, and determine a length, a width, and direction information of the target empty parking space based on the coordinates of the four corner points of the target empty parking space. In some embodiments, the direction information of the target empty parking space may be determined based on a length direction of the target empty parking space. For example, the length direction of the target empty parking space is determined as a direction of the target empty parking space. Obtaining the direction information of the target empty parking space helps determine a parking direction of the vehicle.

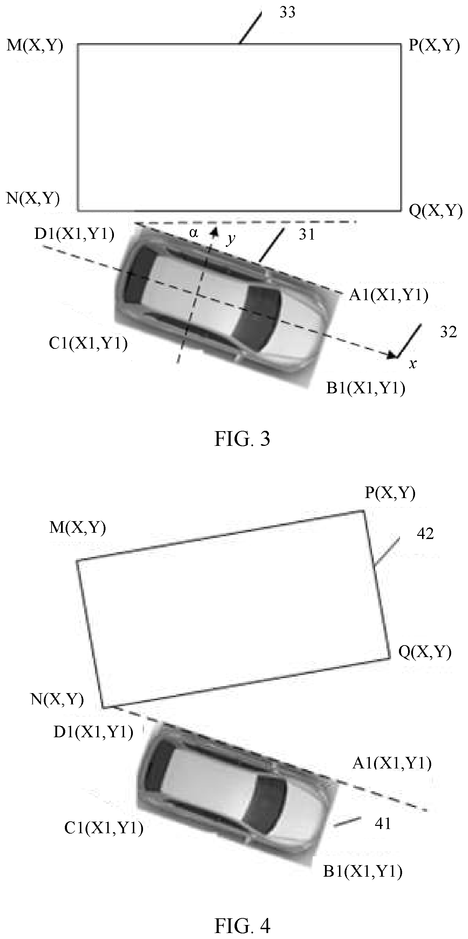

FIG. 3 is used as an example. FIG. 3 is a diagram of an orientation between a vehicle and a target empty parking space according to an embodiment of this application. As shown in FIG. 3, a coordinate system 32 is established by using a lateral centerline and a longitudinal centerline of the vehicle 31 as coordinate axes. Based on the coordinate system 32, it is determined that points A1(X1, Y1), B1(X1, Y1), C1(X1, Y1), and D1(X1, Y1) are coordinates of four corner points of the vehicle 31: a front left corner point, a rear left corner point, a front right corner point, and a rear right corner point respectively. The computing device may determine, through calculation based on the coordinates of the four corner points, namely, A1(X1, Y1), B1(X1, Y1), C1(X1, Y1), and D1(X1, Y1) of the vehicle 31, that the tilt angle of the vehicle 31 is α. The computing device may obtain coordinates of four corner points, namely, P(X, Y), Q(X, Y), M(X, Y), and N(X, Y) of the target empty parking space 33 by using a sensor, and determine, based on the coordinates of the four corner points, namely, P(X, Y), Q(X, Y), M(X, Y), and N(X, Y) of the target empty parking space 33, a length direction PM of the target empty parking space as direction information of the target empty parking space.

S202: Judge, based on the tilt angle of the vehicle and the direction information of the target empty parking space, whether the vehicle is tilted relative to the target empty parking space.

In this embodiment of this application, the computing device may judge, based on the tilt angle of the vehicle and the direction information of the target empty parking space, whether the vehicle is tilted relative to the target empty parking space.

In some embodiments, when determining, based on the tilt angle of the vehicle and the direction information of the target empty parking space, whether the vehicle is tilted relative to the target empty parking space, the computing device may judge the tilt angle of the vehicle relative to the target empty parking space based on the coordinates of the four corner points of the vehicle and the coordinates of the four corner points of the target empty parking space. If the tilt angle of the vehicle relative to the target empty parking space is not equal to 0 (that is, greater than or less than 0), the computing device determines that the vehicle is tilted relative to the target empty parking space. If the tilt angle of the vehicle relative to the target empty parking space is equal to 0, the computing device determines that the vehicle is not tilted relative to the target empty parking space.

Specifically, FIG. 4 may be used as an example. FIG. 4 is a diagram of an orientation between a vehicle and a target empty parking space according to another embodiment of this application. As shown in FIG. 4, a tilt angle of a vehicle 41 relative to a target empty parking space 42 is an included angle between A1D1 and NQ.

In some embodiments, when the target empty parking space is parallel to a horizontal plane, the tilt angle of the vehicle relative to the target empty parking space is the same as a tilt angle of the vehicle. FIG. 3 is used as an example. An included angle formed by a line A1D1 and a line QN is the tilt angle of the vehicle relative to the target empty parking space.

S203: Determine a lateral movement distance and a lateral movement direction of the vehicle based on the first position information and the second position information if the vehicle is not tilted relative to the target empty parking space.

In this embodiment of this application, if the vehicle is not tilted relative to the target empty parking space, the computing device may determine the lateral movement distance and the lateral movement direction of the vehicle based on the first position information and the second position information.

In some embodiments, if the vehicle is not tilted relative to the target empty parking space, the vehicle is oriented parallel to the target empty parking space, a front end of the vehicle does not cross a first parking space boundary line of the target empty parking space, and a rear end of the vehicle does not cross a second parking space boundary line of the target empty parking space, the computing device determines the lateral movement distance and the lateral movement direction of the vehicle based on the first position information and the second position information.

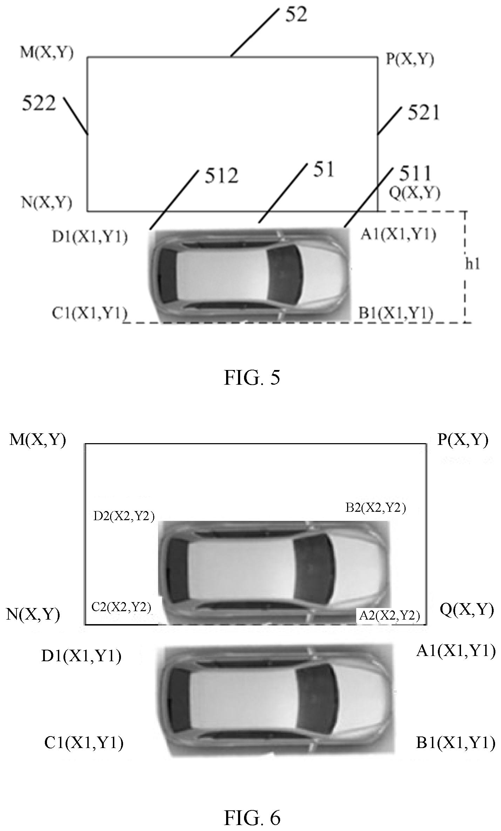

Specifically, FIG. 5 may be used as an example for description. FIG. 5 is a diagram of an orientation between a vehicle and a target empty parking space according to another embodiment of this application. As shown in FIG. 5, the vehicle 51 is not tilted relative to the target empty parking space 52, that is, the vehicle 51 is oriented parallel to the target empty parking space 52. A front end 511 of the vehicle does not cross a first parking space boundary line 521 of the target empty parking space, and a rear end 512 of the vehicle 51 does not cross a second parking space boundary line 522 of the target empty parking space 52. The computing device may determine, based on the first position information of the vehicle 51 and the second position information of the target empty parking space 52, that the lateral movement distance of the vehicle is h1, and the lateral movement direction is toward a left side of the vehicle 51 (that is, toward the target empty parking space).

S204: Control, based on the lateral movement distance and the lateral movement direction, the vehicle to move laterally into the target empty parking space.

In this embodiment of this application, the computing device may control, based on the lateral movement distance and the lateral movement direction, the vehicle to move laterally into the target empty parking space.

In some embodiments, a manner in which the computing device controls the vehicle to move laterally includes: controlling a left front wheel and a right rear wheel of the vehicle to rotate forward, and controlling a left rear wheel and a right front wheel of the vehicle to rotate backward, to control the vehicle to move parallel to the left; or controlling the left front wheel and the right rear wheel of the vehicle to rotate backward, and controlling the left rear wheel and the right front wheel of the vehicle to rotate forward, to control the vehicle to move parallel to the right.

In some embodiments, after the vehicle moves into the target empty parking space, a distance d between a front end line of the vehicle or a parking space line and a parking space boundary line corresponding to the target empty parking space is greater than 0 and less than a difference between a parking space length and a vehicle length, that is, 0<d<parking space length-vehicle length. That is, after moving into the target empty parking space, the vehicle does not cross a line (namely, the parking space boundary line of the target empty parking space).

Specifically, FIG. 5 may be used as an example for description. The computing device may control, based on a determined lateral movement distance of a vehicle, a left front wheel and a right rear wheel of the vehicle 51 to rotate forward, and control a left rear wheel and a right front wheel of the vehicle 51 to rotate backward, to control the vehicle 51 to move parallel to the left into a target empty parking space 52. After the vehicle 51 moves parallel to the left into the target empty parking space 52, a distance between a front end line A1B1 and a first parking space boundary line 521 of the target empty parking space 52 is greater than 0 and less than a difference between a parking space length and a vehicle length.

In some embodiments, the computing device may determine, based on the lateral movement distance of the vehicle, a lateral movement distance and a lateral movement direction of each wheel of the vehicle, where the lateral movement distance and the lateral movement direction of each wheel may be determined based on the coordinates of the four corner points of the vehicle. FIG. 6 is used as an example. FIG. 6 is a diagram of automatic parking based on lateral movement according to an embodiment of this application. As shown in FIG. 6, it is assumed that coordinates of four corner points of a vehicle before lateral movement are A1(X1, Y1), B1(X1, Y1), C1(X1, Y1), and D1(X1, Y1), and coordinates of four corner points of the vehicle after lateral movement are A2(X2, Y2), B2(X2, Y2), C2(X2, Y2), and D2(X2, Y2). In this case, the computing device may separately calculate A1(X1, Y1)-A2(X2, Y2), B1(X1, Y1)-B2(X2, Y2), C1(X1, Y1)-C2(X2, Y2), and D1(X1, Y1)-D2(X2, Y2) based on the coordinates of the four corner points of the vehicle after lateral movement, determine a lateral movement distance of each wheel based on an absolute value of each obtained calculation result, and determine a lateral movement direction of each wheel based on a positive or negative sign of each calculation result. The positive sign indicates rightward movement, and the negative sign indicates leftward movement.

In this embodiment of this application, the first position information of the position of the vehicle, the tilt angle of the vehicle, and the second position information and the direction information of the target empty parking space are obtained; whether the vehicle is tilted relative to the target empty parking space is judged based on the tilt angle of the vehicle and the direction information of the target empty parking space; if the vehicle is not tilted relative to the target empty parking space, that is, the vehicle is oriented parallel to the target empty parking space, the front end of the vehicle does not cross the first parking space boundary line of the target empty parking space, and the rear end of the vehicle does not cross the second parking space boundary line of the target empty parking space, the lateral movement distance and the lateral movement direction of the vehicle are determined based on the first position information and the second position information; and the vehicle may be controlled, based on the lateral movement distance and the lateral movement direction, to move laterally into the target empty parking space. This helps improve efficiency of automatic parking.

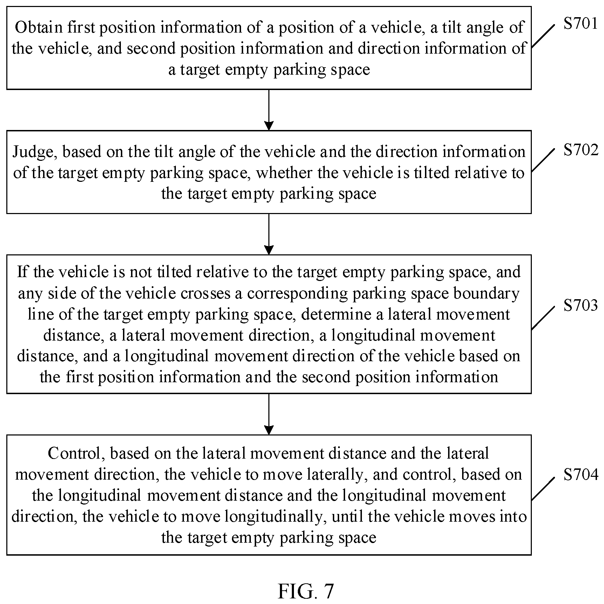

FIG. 7 is a schematic flowchart of an automatic parking control method according to another embodiment of this application. As shown in FIG. 7, the automatic parking control method in this embodiment may be applied to an automatic parking control apparatus, and the automatic parking control apparatus is disposed in a computing device. The method may include the following operations.

S701: Obtain first position information of a position of a vehicle, a tilt angle of the vehicle, and second position information and direction information of a target empty parking space.

S702: Judge, based on the tilt angle of the vehicle and the direction information of the target empty parking space, whether the vehicle is tilted relative to the target empty parking space.

S703: If the vehicle is not tilted relative to the target empty parking space, and any side of the vehicle crosses a corresponding parking space boundary line of the target empty parking space, determine a lateral movement distance, a lateral movement direction, a longitudinal movement distance, and a longitudinal movement direction of the vehicle based on the first position information and the second position information.

In this embodiment of this application, if the vehicle is not tilted relative to the target empty parking space, and the any side of the vehicle crosses the corresponding parking space boundary line of the target empty parking space, the computing device may determine the lateral movement distance, the lateral movement direction, a longitudinal movement distance, and the longitudinal movement direction of the vehicle based on the first position information and the second position information. The any side means a vehicle body, a front end, or a rear end on the any side of the vehicle.

In some embodiments, if the vehicle is not tilted relative to the target empty parking space, the vehicle is oriented parallel to the target empty parking space, and a front end or a rear end of the vehicle crosses the corresponding parking space boundary line of the target empty parking space, the lateral movement distance, the lateral movement direction, the longitudinal movement distance, and the longitudinal movement direction of the vehicle are determined based on the first position information and the second position information.

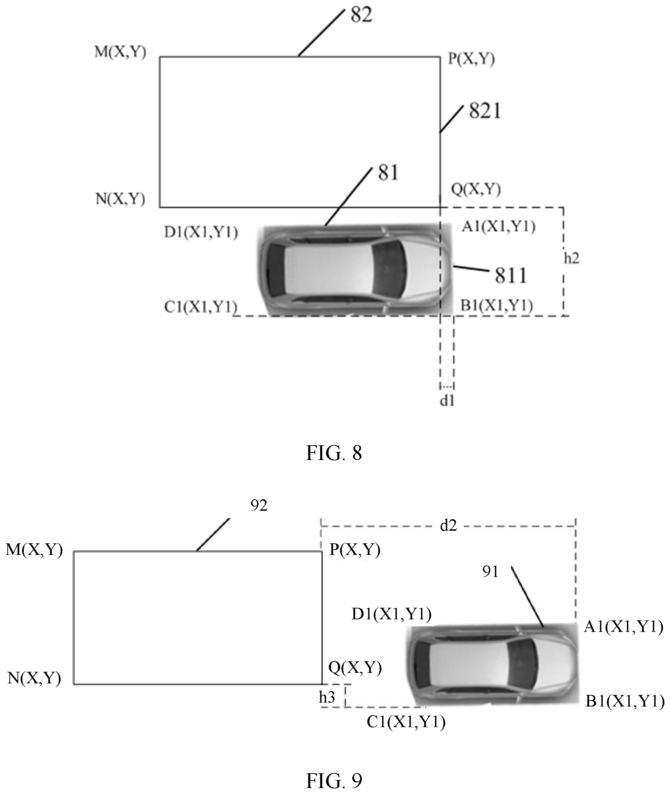

Specifically, FIG. 8 may be used as an example for description. FIG. 8 is a diagram of an orientation between a vehicle and a target empty parking space according to another embodiment of this application. As shown in FIG. 8, the vehicle 81 is not tilted relative to the target empty parking space 82, that is, the vehicle 81 is oriented parallel to the target empty parking space 82, and a front end 811 of the vehicle 81 crosses a boundary line 821 of the target empty parking space 82. The computing device may determine, based on first position information of the vehicle 81 and second position information of the target empty parking space 82, that a lateral movement distance of the vehicle 81 is h2, a lateral movement direction is toward a left side of the vehicle (that is, toward the target empty parking space), a longitudinal movement distance is d1 (a distance between the front end and the boundary line 821 of the target empty parking space), and a longitudinal movement direction is toward a rear of the vehicle.

In some embodiments, if the vehicle is not tilted relative to the target empty parking space, a vehicle body, the front end and the rear end of the vehicle both crosses the corresponding parking space boundary line of the target empty parking space, the lateral movement distance and the longitudinal movement distance of the vehicle are determined based on the first position information and the second position information.

Specifically, FIG. 9 may be used as an example for description. FIG. 9 is a diagram of an orientation between a vehicle and a target empty parking space according to another embodiment of this application. As shown in FIG. 9, the vehicle 91 is not tilted relative to the target empty parking space 92. A vehicle body, a front end, and a rear end of the vehicle 91 all cross a corresponding parking space boundary line of the target empty parking space 92. The computing device may determine, based on first position information of the vehicle 91 and second position information of the target empty parking space 92, that a lateral movement distance of the vehicle 91 is h3, a lateral movement direction is toward a left side of the vehicle, a longitudinal movement distance is d2, and a longitudinal movement direction is toward a rear of the vehicle.

S704: Control, based on the lateral movement distance and the lateral movement direction, the vehicle to move laterally, and control, based on the longitudinal movement distance and the longitudinal movement direction, the vehicle to move longitudinally, until the vehicle moves into the target empty parking space.

In this embodiment of this application, the computing device may control, based on the lateral movement distance and the lateral movement direction, the vehicle to move laterally, and control, based on the longitudinal movement distance and the longitudinal movement direction, the vehicle to move longitudinally, until the vehicle moves into the target empty parking space. In some embodiments, a sequence of controlling the vehicle to move laterally and move longitudinally is not specifically limited in this application.

In some embodiments, the computing device may determine, based on environmental information, the sequence of controlling the vehicle to move laterally and move longitudinally. In an example, if it is detected that an obstacle exists near the target empty parking space, the sequence of controlling the vehicle to move laterally and move longitudinally may be determined based on a position of the obstacle.

FIG. 8 is used as an example. The computing device may control, based on the lateral movement distance h2, the vehicle to move laterally toward the left side of the vehicle, and control, based on the longitudinal movement distance d1, the vehicle to move longitudinally toward the rear of the vehicle, until the vehicle 81 moves into the target empty parking space 82.

FIG. 9 is also used as an example. The computing device may control, based on the lateral movement distance h3, the vehicle to move laterally toward the left side of the vehicle, and control, based on the longitudinal movement distance d2, the vehicle to move longitudinally toward the rear of the vehicle, until the vehicle 91 moves into the target empty parking space 92.

In this embodiment of this application, when the vehicle is not tilted relative to the target empty parking space, the vehicle is oriented parallel to the target empty parking space, and the front end or the rear end of the vehicle crosses the corresponding parking space boundary line of the target empty parking space, the lateral movement distance, the lateral movement direction, the longitudinal movement distance, and the longitudinal movement direction of the vehicle are determined based on the first position information and the second position information; the vehicle is controlled, based on the lateral movement distance and the lateral movement direction, to move laterally, and the vehicle is controlled, based on the longitudinal movement distance and the longitudinal movement direction, to move longitudinally, until the vehicle moves into the target empty parking space. In this way, automatic parking of the vehicle in the target empty parking space is controlled based on lateral movement and longitudinal movement, thereby helping improve efficiency of automatic parking.

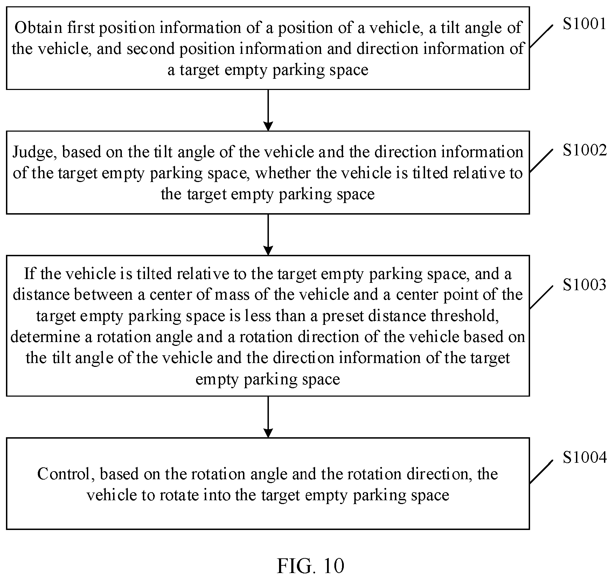

FIG. 10 is a schematic flowchart of an automatic parking control method according to another embodiment of this application. As shown in FIG. 10, the automatic parking control method in this embodiment may be applied to an automatic parking control apparatus, and the automatic parking control apparatus is disposed in a computing device. The method may include at least the following operations.

S1001: Obtain first position information of a position of a vehicle, a tilt angle of the vehicle, and second position information and direction information of a target empty parking space.

S1002: Judge, based on the tilt angle of the vehicle and the direction information of the target empty parking space, whether the vehicle is tilted relative to the target empty parking space.

S1003: If the vehicle is tilted relative to the target empty parking space, and a distance between a center of mass of the vehicle and a center point of the target empty parking space is less than a preset distance threshold, determine a rotation angle and a rotation direction of the vehicle based on the tilt angle of the vehicle and the direction information of the target empty parking space.

In this embodiment of this application, if the vehicle is tilted relative to the target empty parking space, and the distance between the center of mass of the vehicle and the center point of the target empty parking space is less than the preset distance threshold, the rotation angle and the rotation direction of the vehicle are determined based on the tilt angle of the vehicle and the direction information of the target empty parking space. In some embodiments, the center of mass of the vehicle is a mass center of the vehicle, and a position of the center of mass of the vehicle is determined when the vehicle is delivered from a factory. In some embodiments, when the distance between the center of mass of the vehicle and the center point of the target empty parking space is less than the preset distance threshold, it may be ensured that the vehicle stops in the target empty parking space after rotating around the center of mass of the vehicle. In some embodiments, the center point of the target empty parking space is an exact center of the target empty parking space. In some embodiments, the rotation direction of the vehicle may be clockwise or counterclockwise.

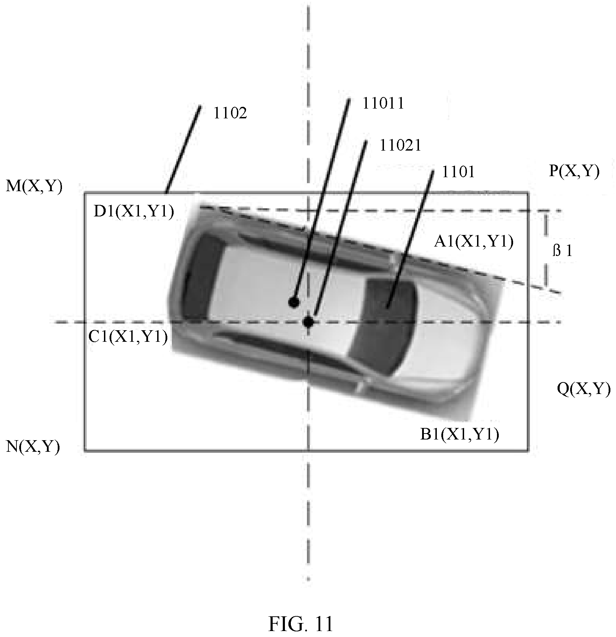

Specifically, FIG. 11 may be used as an example. FIG. 11 is a diagram of an orientation between a vehicle and a target empty parking space according to another embodiment of this application. As shown in FIG. 11, the vehicle 1101 is tilted relative to the target empty parking space 1102, and a distance between a center 11011 of mass of the vehicle 1101 and a center point 11021 of the target empty parking space 1102 is less than a preset distance threshold. The computing device may determine, based on a tilt angle of the vehicle 1101 and direction information of the target empty parking space 1102, that a rotation angle of the vehicle is β1, and that a rotation direction is counterclockwise.

S1004: Control, based on the rotation angle and the rotation direction, the vehicle to rotate into the target empty parking space.

In some embodiments, a manner in which the computing device controls the vehicle to rotate includes: controlling, by using the center of mass of the vehicle as an origin, a left wheel and a right wheel of the vehicle to rotate in different directions, to control the vehicle to rotate.

FIG. 11 is used as an example. The computing device may control, based on the rotation angle and the rotation direction by using the center 11011 of mass of the vehicle 1101 as an origin, a left wheel and a right wheel of the vehicle 1101 to rotate in different directions, to control the vehicle 1101 to rotate counterclockwise by an angle β1 into the target empty parking space 1102.

In this embodiment of this application, when the vehicle is tilted relative to the target empty parking space, and the distance between the center of mass of the vehicle and the center point of the target empty parking space is less than the preset distance threshold, the rotation angle and the rotation direction of the vehicle are determined based on the tilt angle of the vehicle and the direction information of the target empty parking space; and the vehicle is controlled, based on the rotation angle and the rotation direction, to rotate into the target empty parking space. In this way, automatic parking of the vehicle is controlled based on rotation, and efficiency of automatic parking is improved.

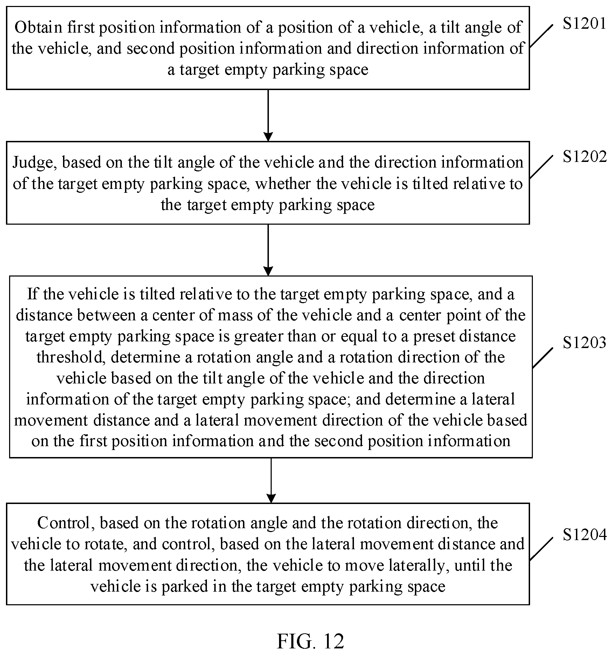

FIG. 12 is a schematic flowchart of an automatic parking control method according to another embodiment of this application. As shown in FIG. 12, the automatic parking control method in this embodiment may be applied to an automatic parking control apparatus, and the automatic parking control apparatus is disposed in a computing device. The method may include at least the following operations.

S1201: Obtain first position information of a position of a vehicle, a tilt angle of the vehicle, and second position information and direction information of a target empty parking space.

S1202: Judge, based on the tilt angle of the vehicle and the direction information of the target empty parking space, whether the vehicle is tilted relative to the target empty parking space.

S1203: If the vehicle is tilted relative to the target empty parking space, and a distance between a center of mass of the vehicle and a center point of the target empty parking space is greater than or equal to a preset distance threshold, determine a rotation angle and a rotation direction of the vehicle based on the tilt angle of the vehicle and the direction information of the target empty parking space; and determine a lateral movement distance and a lateral movement direction of the vehicle based on the first position information and the second position information.

In this embodiment of this application, if the vehicle is tilted relative to the target empty parking space, and the distance between the center of mass of the vehicle and the center point of the target empty parking space is greater than or equal to the preset distance threshold, the computing device may determine the rotation angle and the rotation direction of the vehicle based on the tilt angle of the vehicle and the direction information of the target empty parking space; and determine the lateral movement distance and the lateral movement direction of the vehicle based on the first position information and the second position information. In some embodiments, when the distance between the center of mass of the vehicle and the center point of the target empty parking space is greater than or equal to the preset distance threshold, the vehicle may overlap or intersect with a boundary line of the target empty parking space after rotation, that is, the vehicle crosses the line after rotation.

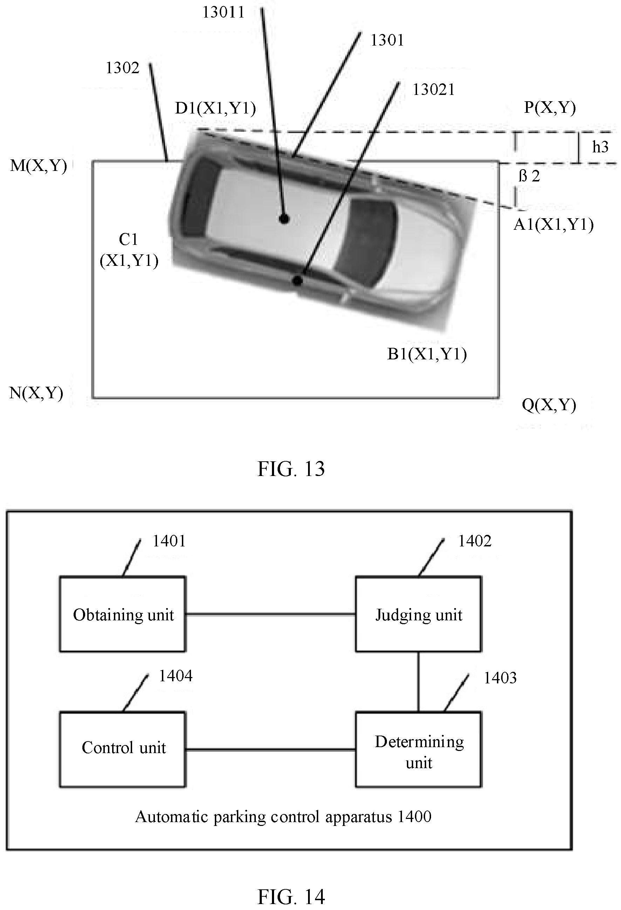

Specifically, FIG. 13 may be used as an example. FIG. 13 is a diagram of an orientation between a vehicle and a target empty parking space according to another embodiment of this application. As shown in FIG. 13, the vehicle 1301 is tilted relative to the target empty parking space 1302, and a distance between a center 13011 of mass of the vehicle 1301 and a center point 13021 of the target empty parking space 1302 is greater than or equal to a preset distance threshold. The computing device may determine, based on a tilt angle of the vehicle 1301 and direction information of the target empty parking space 1302, that a rotation angle of the vehicle 1301 is β2 and a rotation direction is counterclockwise, and determine, based on first position information of the vehicle 1301 and second position information of the target empty parking space 1302, that a lateral movement distance of the vehicle 1301 is h3, and a lateral movement direction is toward a right side of the vehicle.

S1204: Control, based on the rotation angle and the rotation direction, the vehicle to rotate, and control, based on the lateral movement distance and the lateral movement direction, the vehicle to move laterally, until the vehicle is parked in the target empty parking space.

In this embodiment of this application, the computing device may control, based on the rotation angle and the rotation direction, the vehicle to rotate, and control, based on the lateral movement distance and the lateral movement direction, the vehicle to move laterally, until the vehicle is parked in the target empty parking space.

In some embodiments, the computing device may determine, based on environmental information, a sequence of controlling the vehicle to move laterally and rotate. In an example, if it is detected that an obstacle exists near the target empty parking space, the sequence of controlling the vehicle to move laterally and rotate may be determined based on a position of the obstacle.

FIG. 13 is used as an example. The computing device may control, based on the rotation angle β2, the vehicle 1301 to rotate counterclockwise, and control, based on the lateral movement distance h3, the vehicle 1301 to move laterally toward the right side of the vehicle, until the vehicle 1301 is parked in the target empty parking space 1302.

In this embodiment of this application, when the vehicle is tilted relative to the target empty parking space, and the distance between the center of mass of the vehicle and the center point of the target empty parking space is greater than or equal to the preset distance threshold, the rotation angle and the rotation direction of the vehicle are determined based on the tilt angle of the vehicle and the direction information of the target empty parking space; and the lateral movement distance and the lateral movement direction of the vehicle are determined based on the first position information and the second position information. In this way, automatic parking of the vehicle is controlled based on rotation and lateral movement, thereby helping improve efficiency of automatic parking.

FIG. 14 is a diagram of a structure of an automatic parking control apparatus according to an embodiment of this application. As shown in FIG. 14, the automatic parking control apparatus 1400 includes an obtaining unit 1401, a judging unit 1402, a determining unit 1403, and a control unit 1404.

The obtaining unit 1401 is configured to obtain first position information of a position of a vehicle, a tilt angle of the vehicle, and second position information and direction information of a target empty parking space.

The judging unit 1402 is configured to judge, based on the tilt angle of the vehicle and the direction information of the target empty parking space, whether the vehicle is tilted relative to the target empty parking space.

The determining unit 1403 is configured to determine a lateral movement distance and a lateral movement direction of the vehicle based on the first position information and the second position information if the vehicle is not tilted relative to the target empty parking space.

The control unit 1404 is configured to control, based on the lateral movement distance and the lateral movement direction, the vehicle to move laterally into the target empty parking space.

Further, the determining unit 1403 is further configured to:
if the vehicle is not tilted relative to the target empty parking space, the vehicle is oriented parallel to the target empty parking space, a front end of the vehicle does not cross a first parking space boundary line of the target empty parking space, and a rear end of the vehicle does not cross a second parking space boundary line of the target empty parking space, trigger an operation of determining the lateral movement distance and the lateral movement direction of the vehicle based on the first position information and the second position information.

Further, the determining unit 1403 is further configured to:
if the vehicle is not tilted relative to the target empty parking space, and any side of the vehicle crosses a corresponding parking space boundary line of the target empty parking space, determine the lateral movement distance, the lateral movement direction, a longitudinal movement distance, and a longitudinal movement direction of the vehicle based on the first position information and the second position information, where the any side means a vehicle body, a front end, or a rear end on the any side of the vehicle; and
control, based on the lateral movement distance and the lateral movement direction, the vehicle to move laterally, and control, based on the longitudinal movement distance and the longitudinal movement direction, the vehicle to move longitudinally until the vehicle moves into the target empty parking space.

Further, the determining unit 1403 is further configured to:
if the vehicle is tilted relative to the target empty parking space, and a distance between a center of mass of the vehicle and a center point of the target empty parking space is less than a preset distance threshold, determine a rotation angle and a rotation direction of the vehicle based on the tilt angle of the vehicle and the direction information of the target empty parking space; and
control, based on the rotation angle and the rotation direction, the vehicle to rotate into the target empty parking space.

Further, the determining unit 1403 is further configured to:
if the vehicle is tilted relative to the target empty parking space, and a distance between a center of mass of the vehicle and a center point of the target empty parking space is greater than or equal to a preset distance threshold, determine a rotation angle and a rotation direction of the vehicle based on the tilt angle of the vehicle and the direction information of the target empty parking space; and determine the lateral movement distance and the lateral movement direction of the vehicle based on the first position information and the second position information; and
control, based on the rotation angle and the rotation direction, the vehicle to rotate, and control, based on the lateral movement distance and the lateral movement direction, the vehicle to move laterally until the vehicle moves into the target empty parking space.

Further, when controlling the vehicle to move laterally, the control unit 1404 is specifically configured to:
control a left front wheel and a right rear wheel of the vehicle to rotate forward, and control a left rear wheel and a right front wheel of the vehicle to rotate backward, to control the vehicle to move parallel to the left; or
control the left front wheel and the right rear wheel of the vehicle to rotate backward, and control the left rear wheel and the right front wheel of the vehicle to rotate forward, to control the vehicle to move parallel to the right.

Further, when controlling the vehicle to rotate, the control unit 1404 is specifically configured to:
control, by using the center of mass of the vehicle as an origin, a left wheel and a right wheel of the vehicle to rotate in different directions, to control the vehicle to rotate.

In this embodiment of this application, the automatic parking control apparatus may obtain the first position information of the position of the vehicle, the tilt angle of the vehicle, and the second position information and the direction information of the target empty parking space; judge, based on the tilt angle of the vehicle and the direction information of the target empty parking space, whether the vehicle is tilted relative to the target empty parking space; determine the lateral movement distance and the lateral movement direction of the vehicle based on the first position information and the second position information if the vehicle is not tilted relative to the target empty parking space; and control, based on the lateral movement distance and the lateral movement direction, the vehicle to move laterally into the target empty parking space. This manner helps improve efficiency of automatic parking.

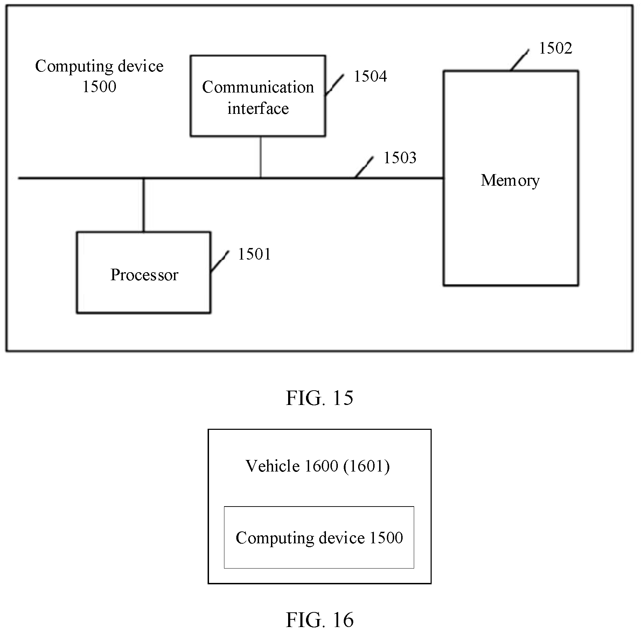

FIG. 15 is a diagram of a structure of a computing device according to an embodiment of this application. As shown in FIG. 15, the computing device 1500 may include one or more processors 1501, a memory 1502, a bus 1503, and a communication interface 1504. The processor 1501, the communication interface 1504, and the memory 1502 are connected to each other through the bus 1503. The memory 1502 is configured to store a program. The processor 1501 is configured to invoke, by using the bus 1503, the program stored in the memory, to perform the following operations:
obtaining first position information of a position of a vehicle, a tilt angle of the vehicle, and second position information and direction information of a target empty parking space;
judging, based on the tilt angle of the vehicle and the direction information of the target empty parking space, whether the vehicle is tilted relative to the target empty parking space;
determining a lateral movement distance and a lateral movement direction of the vehicle based on the first position information and the second position information if the vehicle is not tilted relative to the target empty parking space; and
controlling, based on the lateral movement distance and the lateral movement direction, the vehicle to move laterally into the target empty parking space.

Further, the processor 1501 is further configured to:
if the vehicle is not tilted relative to the target empty parking space, the vehicle is oriented parallel to the target empty parking space, a front end of the vehicle does not cross a first parking space boundary line of the target empty parking space, and a rear end of the vehicle does not cross a second parking space boundary line of the target empty parking space, trigger an operation of determining the lateral movement distance and the lateral movement direction of the vehicle based on the first position information and the second position information.

Further, the processor 1501 is further configured to:
if the vehicle is not tilted relative to the target empty parking space, and any side of the vehicle crosses a corresponding parking space boundary line of the target empty parking space, determine the lateral movement distance, the lateral movement direction, a longitudinal movement distance, and a longitudinal movement direction of the vehicle based on the first position information and the second position information, where the any side means a vehicle body, a front end, or a rear end on the any side of the vehicle; and
control, based on the lateral movement distance and the lateral movement direction, the vehicle to move laterally, and control, based on the longitudinal movement distance and the longitudinal movement direction, the vehicle to move longitudinally until the vehicle moves into the target empty parking space.

Further, the processor 1501 is further configured to:
if the vehicle is tilted relative to the target empty parking space, and a distance between a center of mass of the vehicle and a center point of the target empty parking space is less than a preset distance threshold, determine a rotation angle and a rotation direction of the vehicle based on the tilt angle of the vehicle and the direction information of the target empty parking space; and
control, based on the rotation angle and the rotation direction, the vehicle to rotate into the target empty parking space.

Further, the processor 1501 is further configured to:
if the vehicle is tilted relative to the target empty parking space, and a distance between a center of mass of the vehicle and a center point of the target empty parking space is greater than or equal to a preset distance threshold, determine a rotation angle and a rotation direction of the vehicle based on the tilt angle of the vehicle and the direction information of the target empty parking space; and determine the lateral movement distance and the lateral movement direction of the vehicle based on the first position information and the second position information; and
control, based on the rotation angle and the rotation direction, the vehicle to rotate, and control, based on the lateral movement distance and the lateral movement direction, the vehicle to move laterally until the vehicle moves into the target empty parking space.

Further, when controlling the vehicle to move laterally, the processor 1501 is specifically configured to:
control a left front wheel and a right rear wheel of the vehicle to rotate forward, and control a left rear wheel and a right front wheel of the vehicle to rotate backward, to control the vehicle to move parallel to the left; or
control the left front wheel and the right rear wheel of the vehicle to rotate backward, and control the left rear wheel and the right front wheel of the vehicle to rotate forward, to control the vehicle to move parallel to the right.

Further, when controlling the vehicle to rotate, the processor 1501 is specifically configured to:
control, by using the center of mass of the vehicle as an origin, a left wheel and a right wheel of the vehicle to rotate in different directions, to control the vehicle to rotate.

In this embodiment of this application, the computing device may obtain the first position information of the position of the vehicle, the tilt angle of the vehicle, and the second position information and the direction information of the target empty parking space; judge, based on the tilt angle of the vehicle and the direction information of the target empty parking space, whether the vehicle is tilted relative to the target empty parking space; determine the lateral movement distance and the lateral movement direction of the vehicle based on the first position information and the second position information if the vehicle is not tilted relative to the target empty parking space; and control, based on the lateral movement distance and the lateral movement direction, the vehicle to move laterally into the target empty parking space. This manner helps improve efficiency of automatic parking.

It should be understood that, in this embodiment of this application, the processor 1501 may be a central processing unit (Central Processing Unit, CPU), or the processor may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA), another programmable logic device, a discrete gate or transistor logic device, a discrete hardware component, or the like. The general-purpose processor may be a microprocessor, any conventional processor, or the like.

The memory 1502 may include a read-only memory and a random access memory and provide instructions and data to the processor 1501. A part of the memory 1502 may further include a non-volatile random access memory. For example, the memory 1502 may further store device type information.

During specific implementation, the processor 1501 described in this embodiment of this application may execute the implementations described in the automatic parking control methods provided in embodiments of this application, or may execute the implementations of automatic parking control apparatus described in the embodiment of this application. Details are not described herein again.

An embodiment of this application further provides a vehicle. As shown in FIG. 16, the vehicle 1600 includes a vehicle main body 1601 and a computing device 1500. The computing device is configured to perform the method described with reference to FIG. 2, FIG. 7, FIG. 10, or FIG. 12, to control automatic parking of the vehicle.

An embodiment of this application further provides a computer-readable storage medium. The computer-readable storage medium stores program instructions. When the program instructions are executed, the method described with reference to FIG. 2, FIG. 7, FIG. 10, or FIG. 12 is implemented.

A person of ordinary skill in the art may be aware that the units and algorithm steps in the examples described with reference to the embodiments disclosed in this specification may be implemented by electronic hardware, computer software, or a combination thereof. To clearly describe the interchangeability between the hardware and the software, the foregoing has generally described compositions and steps of the examples according to functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing described terminal and unit, refer to corresponding processes in the method embodiments.

In the several embodiments provided in this application, it should be understood that the disclosed computing device and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

Sequence adjustment, combination, and deletion may be performed on the operations in the method embodiments of this application according to an actual requirement.

The units in the terminal in embodiments of this application may be combined, divided, and deleted according to an actual requirement.

The units described as separate parts may or may not be physically separate, and parts displayed as units may or may not be physical units, may be located in one place, or may be distributed on a plurality of network units. Some or all the units may be selected based on actual requirements to achieve the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An automatic parking control method, wherein the method comprises:
obtaining (S201, S701, S1001, and S1201) first position information of a position of a vehicle, a tilt angle of the vehicle, and second position information and direction information of a target empty parking space;
judging (S202, S702, S1002, and S1202), based on the tilt angle of the vehicle and the direction information of the target empty parking space, whether the vehicle is tilted relative to the target empty parking space;
determining (S203) a lateral movement distance and a lateral movement direction of the vehicle based on the first position information and the second position information if the vehicle is not tilted relative to the target empty parking space; and
controlling (S204), based on the lateral movement distance and the lateral movement direction, the vehicle to move laterally into the target empty parking space.

2. The method according to claim 1, wherein the determining a lateral movement distance and a lateral movement direction of the vehicle based on the first position information and the second position information if the vehicle is not tilted relative to the target empty parking space comprises:
if the vehicle is not tilted relative to the target empty parking space, a front end of the vehicle does not cross a first parking space boundary line of the target empty parking space, and a rear end of the vehicle does not cross a second parking space boundary line of the target empty parking space, determining the lateral movement distance and the lateral movement direction of the vehicle based on the first position information and the second position information.

3. The method according to claim 1, wherein the determining a lateral movement distance and a lateral movement direction of the vehicle based on the first position information and the second position information if the vehicle is not tilted relative to the target empty parking space comprises:
if the vehicle is not tilted relative to the target empty parking space, and any side of the vehicle crosses a corresponding parking space boundary line of the target empty parking space, determining (S703) the lateral movement distance, the lateral movement direction, a longitudinal movement distance, and a longitudinal movement direction of the vehicle based on the first position information and the second position information, wherein the any side means a vehicle body, a front end, or a rear end on the any side of the vehicle; and
the controlling, based on the lateral movement distance and the lateral movement direction, the vehicle to move laterally into the target empty parking space comprises:
controlling (S704), based on the lateral movement distance and the lateral movement direction, the vehicle to move laterally, and controlling (S704), based on the longitudinal movement distance and the longitudinal movement direction, the vehicle to move longitudinally until the vehicle moves into the target empty parking space.

4. The method according to claim 1, wherein the method further comprises:
if the vehicle is tilted relative to the target empty parking space, and a distance between a center of mass of the vehicle and a center point of the target empty parking space is less than a preset distance threshold, determining (S1003) a rotation angle and a rotation direction of the vehicle based on the tilt angle of the vehicle and the direction information of the target empty parking space; and
controlling (S1004), based on the rotation angle and the rotation direction, the vehicle to rotate into the target empty parking space.

5. The method according to claim 1, wherein the method further comprises:
if the vehicle is tilted relative to the target empty parking space, and a distance between a center of mass of the vehicle and a center point of the target empty parking space is greater than or equal to a preset distance threshold, determining (S1203) a rotation angle and a rotation direction of the vehicle based on the tilt angle of the vehicle and the direction information of the target empty parking space; and determining (S1203) the lateral movement distance and the lateral movement direction of the vehicle based on the first position information and the second position information; and
controlling (S1204), based on the rotation angle and the rotation direction, the vehicle to rotate, and controlling (S1204), based on the lateral movement distance and the lateral movement direction, the vehicle to move laterally until the vehicle moves into the target empty parking space.

6. The method according to any one of claims 1 to 3 or 5, wherein the controlling the vehicle to move laterally comprises:
controlling a left front wheel and a right rear wheel of the vehicle to rotate forward, and controlling a left rear wheel and a right front wheel of the vehicle to rotate backward, to control the vehicle to move parallel to the left; or
controlling the left front wheel and the right rear wheel of the vehicle to rotate backward, and controlling the left rear wheel and the right front wheel of the vehicle to rotate forward, to control the vehicle to move parallel to the right.

7. The method according to claim 4 or 5, wherein the controlling the vehicle to rotate comprises:
controlling, by using the center of mass of the vehicle as an origin, a left wheel and a right wheel of the vehicle to rotate in different directions, to control the vehicle to rotate.

8. The method according to any one of claims 1 to 7, wherein the obtaining a tilt angle of the vehicle comprises:
determining coordinates of four corner points of the vehicle in a preset coordinate system, wherein the coordinate system is established by using a lateral centerline and a longitudinal centerline of the vehicle as coordinate axes; and
calculating the tilt angle of the vehicle relative to a horizontal plane based on the coordinates of the four corner points of the vehicle in the preset coordinate system.

9. The method according to any one of claims 1 to 8, wherein the obtaining direction information of a target empty parking space comprises:
determining coordinates of four corner points of the target empty parking space in the preset coordinate system, wherein the coordinate system is established by using the lateral centerline and the longitudinal centerline of the vehicle as the coordinate axes;
calculating a length direction of the target empty parking space based on the coordinates of the four corner points of the target empty parking space in the preset coordinate system; and
determining the length direction of the target empty parking space as the direction information of the target empty parking space.

10. The method according to any one of claims 1 to 9, wherein the judging, based on the tilt angle of the vehicle and the direction information of the target empty parking space, whether the vehicle is tilted relative to the target empty parking space comprises:
determining a tilt angle of the vehicle relative to the target empty parking space based on the tilt angle of the vehicle and the direction information of the target empty parking space; and
if the tilt angle of the vehicle relative to the target empty parking space is not equal to 0, determining that the vehicle is tilted relative to the target empty parking space; or
if the tilt angle of the vehicle relative to the target empty parking space is equal to 0, determining that the vehicle is not tilted relative to the target empty parking space.

11. The method according to claim 10, wherein the determining a tilt angle of the vehicle relative to the target empty parking space based on the tilt angle of the vehicle and the direction information of the target empty parking space comprises:
determining the tilt angle of the vehicle relative to the target empty parking space based on the tilt angle of the vehicle, the direction information of the target empty parking space, and an angle calculation formula.

12. An automatic parking control apparatus (1400), wherein the apparatus comprises:
an obtaining unit (1401), configured to obtain first position information of a position of a vehicle, a tilt angle of the vehicle, and second position information and direction information of a target empty parking space;
a judging unit (1402), configured to judge, based on the tilt angle of the vehicle and the direction information of the target empty parking space, whether the vehicle is tilted relative to the target empty parking space;
a determining unit (1403), configured to determine a lateral movement distance and a lateral movement direction of the vehicle based on the first position information and the second position information if the vehicle is not tilted relative to the target empty parking space; and
a control unit (1404), configured to control, based on the lateral movement distance and the lateral movement direction, the vehicle to move laterally into the target empty parking space.

13. A computing device (1500), comprising a processor (1501) and a memory (1502), wherein the processor and the memory are connected to each other, the memory is configured to store a computer program, and the processor is configured to invoke the computer program, to perform the method according to any one of claims 1 to 11.

14. A vehicle (1600), wherein the vehicle comprises a vehicle main body (1601) and a computing device (1500), and the computing device is configured to perform the method according to any one of claims 1 to 11 to control automatic parking of the vehicle.

15. A computer-readable storage medium, wherein the computer-readable storage medium stores program instructions, and when the program instructions are executed, the method according to any one of claims 1 to 11 is implemented.
